# EUROPÄISCHE PATENTSCHRIFT

(11) **EP 0 750 178 B1**
(45) Veröffentlichungstag und Bekanntmachung des Hinweises auf die Patenterteilung: **08.08.2001**
(21) Anmeldenummer: 96108706.1
(22) Anmeldetag: 31.05.1996
(51) Int. Cl.: G01C 22/02, H03K 21/40

(54) **Verfahren zur Erkennung von Manipulationen an einer mit einem Impulsgeber durchgeführten Messung einer von einem Fahrzeug zurückgelegten Wegstrecke**
Method for detecting manipulations in the measurement of a distance travelled by a vehicle and measured through a pulse generator
Méthode de détection de manipulations à la mesure de la distance parcourue par un véhicule et mesurées par un générateur d'impulsions

(30) Priorität: 20.06.1995 DE 19522257
(43) Veröffentlichungstag der Anmeldung: 27.12.1996
(73) Patentinhaber: Mannesmann VDO AG, 60326 Frankfurt (DE)
(72) Erfinder: Bacic, Helmut, Dipl.-Ing.(FH), 78126 Königsfeld (DE); Grill, Thomas, Dipl.-Ing.(FH), 7850 Villingen-Schwenningen (DE); Gruler, Martin, Dipl.-Ing.(FH), 78554 Aixheim (DE)

(56) Entgegenhaltungen:
- EP-A- 0 664 528
- US-A- 4 217 484
- US-A- 5 155 747

## Beschreibung

Die Erfindung betrifft ein Verfahren zur Erkennung von Manipulationen an einer mit einem Impulsgeber durchgeführten Messung einer von einem Fahrzeug zurückgelegten Wegstrecke gemäß dem Oberbegriff des ersten Anspruchs.

Wegstreckenerfassungseinrichtungen, die personenbezogen Bewegungsdaten eines Fahrzeugs registrieren, sind aufgrund der durch sie möglichen Kontrolle des Fahrzeugführers häufig Gegenstand unberechtigter Eingriffe. Insbesondere in einem Fahrtschreibersystem, in welchem das Datenerfassungsgerät als Fahrtschreiber ausgebildetet ist, sind Maßnahmen zur Erkennung von Manipulationen sehr bedeutsam, da ein Fahrtschreiber die Einhaltung von Sozialvorschriften überwachen hilft, was der Verkehrssicherheit dient und Wettbewerbsverzerrungen entgegenwirkt. Eine weitere wichtige Ausbildung der gattungsgemäßen Wegstreckenerfassungseinrichtungen sind Taxametersysteme.

Um eine Manipulation an einer von einem Datenerfassungsgerät erfolgten Datenregistrierung nicht augenfällig erkennbar werden zu lassen, wird oft das Impulsgebersignal, also die Signalquelle für das Datenerfassungsgerät, manipuliert. Der zu einem Datenerfassungsgerät gehörige Impulsgeber greift üblicherweise ein dem vom Fahrzeug zurückgelegten Weg proportionales Impulssignal am Getriebe des Fahrzeugs ab. Einmal gefundene Manipulationsmöglichkeiten finden erfahrungsgemäß in den interessierten Kreisen eine sehr rasche Verbreitung.

Eine der am weitesten verbreiteten Manipulationen besteht im Umschalten auf einen "Dummy-Geber", der jede beliebige Impulszahl - und damit auch jede beliebige Wegstrecke und Geschwindigkeit - vortäuschen kann. Auch wurden in Fahrzeugen eigens zur Manipulation der Datenregistrierung, also z.B zur Manipulation des Fahrtschreiberaufschriebs installierte Geräte gefunden, die in die Signalleitung zwischen Impulsgeber und Datenerfassungsgerät (Fahrtschreiber) eingefügt waren, um die vom Impulsgeber generierten Impulssignale in einem einstellbaren Verhältnis zur Vortäuschung geringerer Geschwindigkeiten oder Wegstrecken zu unterdrücken. In der üblichen Art der Datenaufzeichnung mit einem Fahrtschreiber ist der Bezug von Daten aus einer manipulierten Signalquelle kaum nachweisbar, weil ein Fahrtschreiber herkömmlicher Bauart über keine Einrichtung verfügt, die die Echtheit eingehender Signale prüft.

Es liegt auf der Hand, daß den genannten unberechtigten Einflußnahmen entgegengewirkt werden muß. So beschreibt das Dokument US 5,155,747 eine Vorrichtung zur Erkennung von Manipulationen an einer Übertragungsstrecke 4 zwischen einem Impulsgeber und einem digitalen Meßinstrument,
a) wobei der Impulsgeber in einem versiegelten Gehäuse 10 ein Sensorelement 1 und eine integrierte Verschlüsselungsschaltung 5 aufweist,
b) wobei das Sensorelement 1 während des Meßvorgangs ein Ausgangssignal 11 an die Verschlüsselungsschaltung 5 abgibt,
c) wobei die Verschlüsselungsschaltung 5 als wesentliche Funktionseinheiteneinen mit einem Oszillator ausgestatteten Systemtaktgeber 51, eine Steuereinheit 52 und ein Datenregister 53 enthält,
d) wobei das vom Sensorelement 1 an die Verschlüsselungsschaltung 5 abgegebene Ausgangssignal 11 die Steuereinheit 52 in der Verschlüsselungsschaltung 5 dazu veranlaßt, ein in dem Datenregister 53 zwischengespeichertes und auf den Systemtaktgeber 51 bezogenes Impulssignal 50 vom Impulsgeber über die Übertragungsstrecke 4 an das Meßinstrument zu senden,
e) wobei das Meßinstrument in einem ebenfalls versiegelten Gehäuse 20 eine integrierte Entschlüsselungsschaltung 6 und das eigentliche Meßwerk 2 aufweist,
f) wobei die Entschlüsselungsschaltung 6 als wesentliche Funktionseinheiten einen mit einem Oszillator ausgestatteten Systemtaktgeber 64, eine Steuereinheit 65 und ein Datenregister 66 enthält,
g) wobei das vom Impulsgeber abgegebene Impulssignal 50 im Meßinstrument der Entschlüsselungsschaltung 6 zugeleitet wird, um dort von der Steuereinheit 65 gesteuert mit einem in dem Datenregister 66 zwischengespeicherten und auf den Systemtaktgeber 64 bezogenen Impulssignal 60 verglichen zu werden,
h) und wobei die Entschlüsselungsschaltung 6 dann einen gültigen Impuls an das Meßwerk 2 abgibt, wenn das auf den Systemtaktgeber 51 bezogene Impulssignal 50 mit dem auf den Systemtaktgeber 64 bezogenen Impulssignal 60 identisch ist.

Diese Vorrichtung leitet nicht unmittelbar das vom dortigen Sensorelement 1 abgegebene Ausgangssignal 11 an das Meßwerk 2 weiter, sondern codiert dieses Ausgangssignal 11 mittels eines im Impulsgeber vorgesehenen Zeittaktes. Nach der Übermittlung des in der Verschlüsselungsschaltung 5 generierten und auf den Systemtaktgeber 51 bezogenen Impulssignals 50 muß dieses Impulssignal 50 im Meßinstrument wieder decodiert werden. Dieses Vorgehen ist ersichtlich aufwendig und kann nur dann funktionieren, wenn sichergestellt ist, daß während der Gebrauchsdauer der aus Impulsgeber und Meßinstrument bestehenden Vorrichtung temperaturbedingte oder alterungsbedingte Abweichungen zwischen dem Systemtaktgeber 51 in der Verschlüsselungsschaltung 5 und dem Systemtaklgeber 64 in der Entschlüsselungsschaltung 6 nicht entstehen, weil andernfalls systembedingt kein gültiger Impuls für das Meßwerk 2 zustande kommt. Aber gerade bei Anwendungen in einem Fahrzeug bestehen keine idealen klimatischen Voraussetzungen, so daß mit den genannten negativen Einflüssen gerechnet werden muß. Überdies führen bei dem vorgenannten Aufbau der Vorrichtung schon allein die Exemplarstreuungen von Systemtaktgebern dazu, daß diese Vorrichtung für ein in der Serie zu fertigendes Produkt kaum brauchbar ist.

Überdies beschreibt das Dokument US 4,217,484 einen Taxameter, dem die Signale von im Fahrzeug an den Fahrgastsitzen angeordneten Sitzkontakten sowie Signale über die Uhrzeit, die Fahrzeuggeschwindigkeit und die vom Fahrzeug zurückgelegte Wegstrecke zugeführt werden, wobei eine Fahrpreisberechnung durch das Taxameter nur dann erfolgt, wenn sowohl mindestens ein Sitzkontakt Geschlossen ist als auch vom Fahrzeug eine Mindestgeschwindigkeit erreicht bzw. eine Mindestwegstrecke zurückgelegt worden ist. Diese Maßnahmen beziehen sich demnach allein auf eine Prüfung der Plausibilität der dem Taxameter zugeführten Signale. Sie zeigen jedoch nicht, wie eine Erhöhung in der Manipulationssicherheit der zu übertragenen Signale erreicht werden kann.

Es ist die Aufgabe der vorliegenden Erfindung, Manipulationen der genannten Art an Wegstreckenerfassungseinrichtungen auf einfache und kostengünstige Weise sicher erkennbar zu machen. Diese Aufgabe wird durch ein Verfahren mit den Merkmalen des ersten Anspruchs gelöst. Die weiteren Ansprüche zeigen vorteilhafte Weiterbildungen der gefundenen Lösung.

In einem zu einer Wegstreckenerfassungseinrichtung gehörenden Impulsgeber werden die Impulse durch Abtasten eines Zahnrades im Getriebe erzeugt, wobei das Ausgangssignal des Impulsgebers ein pulsierendes Signal ist, dessen Frequenz der Umlaufgeschwindigkeit des Zahnrades proportional ist. Die hier vorgeschlagene Lösung macht sich nun zunutze, daß das Tastverhältnis des Weg proportionalen Impulssignals, also dessen Puls-zu-Pause-Verhältnis bzw. die Pulsweite, 1.) von der Beschaffenheit des Zahnrades, 2.) von Einstellungen in der Elektronik des Impulsgebers und 3.) insbesondere von dem durch Einbautoleranzen bestimmten Abstand des im Impulsgeber enthaltenen Sensorelements zum abzutastenden Zahnrad abhängt, dh von der Luftspaltbreite zwischen Impulsgeber und Zahnrad. Änderungen der Luftspaltbreite von nur einem zehntel Millimeter führen bereits zu einer nachweisbaren Beeinflussung des Tastverhältnisses im Ausgangssignal des Impulsgebers. Daher ist das Tastverhältnis für jeden Impulsgeber eine von seiner Einbaulage abhängige ganz individuelle Größe. Hier ergibt sich so etwas wie ein "Fingerabdruck" des Getriebes. Ändert sich in einer Wegstreckenerfassungseinrichtung das Tastverhältnis im Signal des Impulsgebers plötzlich und sprunghaft, kann eindeutig auf eine Manipulation geschlossen werden. Auch führt das Ausbleiben von einem oder mehreren Impulsen zu einer Verzerrung des Tastverhältnisses.

Die beigefügte **Figur** verdeutlicht die gefundene Lösung durch ein Impulsdiagramm. A1 bezeichnet das Ausgangssignal eines Original Gebers. A2 steht für das von einem "Dummy-Geber" abgegebene Ausgangssignal. Obwohl die Frequenz F beider Impulssignale gleich ist, besitzen die Ausgangssignale A1 und A2 deutlich unterscheidbare Tastverhältnisse infolge der unterschiedlichen Dauer der Impulse.

Im folgenden soll die Erfindung der Einfachheit halber ohne irgendeine Einschränkung an einem Fahrtschreibersystem erörtert werden. Nach der Installation des Impulsgebers und des Datenerfassungsgerätes, also des Fahrtschreibers, in ein Fahrzeug wird zur Inbetriebnahme der Wegstreckenerfassungseinrichtung (des Fahrtschreibersystems) dessen von den Fahrzeuggegebenheiten abhängigen Wegimpulszahl ermittelt, also die Anzahl der vom Impulsgeber generierten Impulse je Wegeinheit. Daraus ergibt sich ein bestimmtes Tastverhältnis für den in dieser Wegstreckenerfassungseinrichtung (Fahrtschreibersystem) verwendeten Impulsgeber. Das ermittelte Tastverhältnis wird vorzugsweise in einem Speicher des Datenerfassungsgerätes (Fahrtschreibers), zB in einem EEPROM, hinterlegt und bildet ein Referenztastverhältnis für künftige Messungen. Während des Fahrbetriebes des Fahrzeugs wird das Tastverhältnis laufend neu ermittelt und mit dem Referenztastverhältnis verglichen. Weicht das neu ermittelte Tastverhältnis, gegebenenfalls unter Berücksichtigung gewisser Toleranzen, in auffälliger Weise von dem Referenztastverhältnis ab, bedeutet dieses eine Manipulation an der Wegstreckenerfassungseinrichtung.

Dabei ist die Ermittlung des Tastverhältnis sowohl bei der erstmaligen Inbetriebnahme des Fahrtschreibersystems als auch bei der fortlaufenden Überprüfung vorzugsweise bei konstanter Geschwindigkeit des Fahrzeugs vorzunehmen. Eine konstante Geschwindigkeit des Fahrzeugs wird dann angenommen, wenn in unmittelbarer Folge hintereinander drei Signalperioden von gleicher Dauer auftreten. Zur Bestimmung des Tastverhältnisses wird vorzugsweise jeweils die mittlere Signalperiode ausgewertet.

Eine Weiterbildung der gefundenen Lösung sieht vor, das Verfahren zur Erkennung von Manipulationen selbstlernend auszugestalten, um Langzeitveränderungen im Tastverhältnis infolge Verschleiß oder von Temperatureinflüssen zu berücksichtigen. Diese Selbstlernfähigkeit bedeutet, daß das im Speicher hinterlegte Referenztastverhältnis selbsttätig durch die Logikeinrichtung im Datenerfassungsgerät allmählich nachgeführt wird. In jedem Fall bleiben auch bei dieser Ausgestaltung des Verfahrens sprunghafte Änderungen im Tastverhältnis zuverlässig erkennbar.

Grundsätzlich kann der Vergleich des während des Fahrzeugbetriebes ermittelten Tastverhältnisses mit dem Referenztastverhältnis auch im Impulsgeber selbst erfolgen, sofern in einem im Impulsgeber angeordneten Speicher dieses Referenztastverhältnis hinterlegt und eine zur Durchführung des Vergleiches geeignete Logikeinrichtung im Impulsgeber angeordnet ist. Diese Ausgestaltung ist dann von Bedeutung, wenn die Signalübertragungsstrecke zwischen Impulsgeber und Datenerfassungsgerät als manipulationssicher betrachtet werden kann, weil zB besondere Signalübertragungstechniken zum Einsatz kommen und nur eine unerlaubte Auswechselung des Impulsgebers selbst oder des abzutastenden Zahnrades zu überwachen ist.

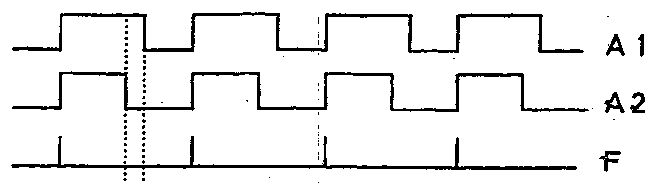

## Patentansprüche

1. Verfahren zur Erkennung von Manipulationen an einer mit einem Impulsgeber durchgeführten Messung einer von einem Fahrzeug zurückgelegten Wegstrecke,
1.1. wobei eine Vorrichtung zur Durchführung des Verfahrens aus einem Impulsgeber und einem Datenerfassungsgerät besteht,
1.2. wobei in einem gewissen Abstand vor dem Impulsgeber ein Zahnrad angeordnet ist und der Impulsgeber durch Abtastung des Zahnrades ein Impulssignal generiert, wobei die Frequenz des Impulssignals der Umlaufgeschwindigkeit des Zahnrades und damit auch der vom Fahrzeug zurückgelegten Wegstrecke proportional ist,
1.3. wobei der Impulsgeber das Impulssignal zur Registrierung an das Datenerfassungsgerät abgibt,
**dadurch gekennzeichnet,**
1.4. daß aus dem Impulssignal ein Wert für die Luftspaltbreite zwischen Impulsgeber und dem Zahnrad bestimmt wird,
1.5. daß der Wert für die Luftspaltbreite bei der Inbetriebnahme des Datenerfassungsgerätes in einem Speicher der Vorrichtung als ein Referenzwert gespeichert wird,
1.6. daß der Wert für die Luftspaltbreite während des Fahrbetriebes des Fahrzeugs neu ermittelt wird
1.7. und daß eine plötzliche und sprunghafte Abweichung des neu ermittelten Wertes für die Luftspaltbreite von dem in dem Speicher hinterlegten Referenzwert als Manipulation an der Vorrichtung gewertet wird.

2. Verfahren nach Anspruch 1,
**dadurch gekennzeichnet,**
daß der Wert für die Luftspaltbreite während des Fahrbetriebes des Fahrzeugs bei dessen konstanter Geschwindigkeit ermittelt wird.

3. Verfahren nach einem der vorangegangenen Ansprüche,
**dadurch gekennzeichnet,**
daß der in dem Speicher als Referenzwert hinterlegte Wert für die Luftspaltbreite zur Berücksichtigung zeitlich langsamer Veränderungen selbsttätig nachgeführt wird.

## Claims

1. Method for detecting manipulation of a measurement, carried out with a pulse transmitter, of a distance travelled by a vehicle, a device for carrying out the method comprising a pulse transmitter and a data acquisition unit, a toothed wheel being arranged at a certain distance in front of the pulse transmitter and the pulse transmitter generating a pulse signal by sensing the toothed wheel, in which case the frequency of the pulse signal is proportional to the rotational speed of the toothed wheel, and thus also to the distance travelled by the vehicle, and the pulse transmitter outputting the pulse signal for registration to the data acquisition unit,
characterized in that
a value for the air gap width between the pulse transmitter and the toothed wheel is determined from the pulse signal, in that the value of the air gap width is stored as a reference value in a memory of the device when the data acquisition unit is put into service, in that the value for the air gap width is newly determined while the vehicle is being driven, and in that a sudden and erratic deviation of the newly determined value for the air gap width from the reference value stored in the memory is evaluated as a manipulation of the device.

2. Method according to Claim 1,
characterized in that
the value for the air gap width is determined at a constant velocity of the vehicle while the vehicle is being driven.

3. Method according to one of the preceding claims,
characterized in that
the value for the air gap width which is stored in the memory as a reference value is automatically adjusted in order to take into account slow changes over time.

## Revendications

1. Procédé pour la détection de manipulations perpétrées sur une mesure, effectuée avec un générateur d'impulsions, d'une distance parcourue par un véhicule,
1.1. un dispositif pour l'exécution du procédé étant constitué d'un générateur d'impulsions et d'un appareil d'acquisition de données,
1.2. une roue dentée étant disposée à une certaine distance devant le générateur d'impulsions et ledit générateur d'impulsions générant, par l'exploration de ladite roue dentée, un signal d'impulsion, la fréquence dudit signal d'impulsion étant proportionnelle à la vitesse de rotation de ladite roue dentée et aussi, de ce fait, de la distance parcourue par le véhicule,
1.3. le générateur d'impulsions transmettant le signal d'impulsion pour l'enregistrement à l'appareil d'acquisition de données.
caractérisé par le fait
1.4. que du signal d'impulsion est dérivée une valeur pour la largeur de l'espace d'air entre le générateur d'impulsions et la roue dentée,
1.5. que, lors de la mise en service de l'appareil d'acquisition de données, la valeur pour la largeur de l'espace d'air sera stockée, comme valeur de référence, dans une mémoire du dispositif,
1.6. que la valeur pour la largeur de l'espace d'air sera déterminée à nouveau pendant la circulation du véhicule
1.7. et qu'une déviation soudaine et brusque de la valeur nouvellement déterminée pour la largeur de l'espace d'air par rapport à la valeur de référence stockée dans la mémoire sera considérée comme manipulation sur le dispositif.

2. Procédé selon la revendication 1,
caractérisé par le fait
que la valeur pour la largeur de l'espace d'air sera déterminée lors de la circulation du véhicule à une vitesse constante de ce dernier.

3. Procédé selon l'une quelconque des revendications précédentes,
caractérisé par le fait
que la valeur stockée dans la mémoire comme valeur de référence pour la largeur de l'espace d'air subit un processus de poursuite compensatrice automatique pour prendre en considération des variations lentes dans le temps.
